# FASCICULE DE BREVET EUROPEEN

(11) **EP 4 033 906 B1**
(45) Date de publication et mention de la délivrance du brevet: **25.02.2026**
(21) Numéro de dépôt: 20775026.6
(22) Date de dépôt: 24.09.2020
(51) Int. Cl.: A23C 19/08, A23C 19/093

(54) **PROCÉDÉ DE FABRICATION D'UN PRODUIT ALIMENTAIRE COMPRENANT UNE MATIÈRE D'ORIGINE LAITIÈRE ET UNE MATIÈRE D'ORIGINE VÉGÉTALE ET PRODUIT ALIMENTAIRE HYBRIDE SUSCEPTIBLE D'ETRE OBTENU PAR CE PROCEDE**
VERFAHREN ZUR HERSTELLUNG EINES LEBENSMITTELPRODUKTS, DAS EINE ZUTAT AUS MILCHPRODUKTEN UND EINE ZUTAT AUS PFLANZLICHEN URSPRUNGS ENTHÄLT, UND DURCH DIESES VERFAHREN ERHÄLTLICHES HYBRID-LEBENSMITTELPRODUKT
METHOD FOR MANUFACTURING A FOOD PRODUCT COMPRISING AN INGREDIENT OF DAIRY ORIGIN AND AN INGREDIENT OF PLANT ORIGIN, AND HYBRID FOOD PRODUCT OBTAINABLE BY THAT PROCESS

(30) Priorité: 25.09.2019 FR 1910594; 05.03.2020 FR 2002250
(43) Date de publication de la demande: 03.08.2022
(73) Titulaire: BEL, 92150 Suresnes (FR)
(72) Inventeur: MANERA, Rémy, 39190 Sainte-Agnes (FR)
(74) Mandataire: Sayettat, Julien Christian
(86) Numéro de dépôt international: PCT/EP2020/076790
(87) Numéro de publication internationale: WO 2021/058686

(56) Documents cités:
- WO-A1-2016/184856
- FR-A1- 2 949 644
- US-A1- 2011 305 740
- US-A1- 2015 237 885
- DATABASE GNPD [online] MINTEL; 8 March 2019 (2019-03-08), ANONYMOUS: "Vegetable Balls with Cheese", XP055728328, retrieved from https://www.gnpd.com/sinatra/recordpage/6391031/ Database accession no. 6391031
- DATABASE GNPD [online] MINTEL; 8 March 2019 (2019-03-08), ANONYMOUS: "Cheese and Vegetable Burger", XP055728354, retrieved from https://www.gnpd.com/sinatra/recordpage/6391033/ Database accession no. 6391033
- DATABASE GNPD [online] MINTEL; 8 March 2019 (2019-03-08), ANONYMOUS: "Vegetable Balls with Cheese", XP055728328, retrieved from www.gnpd.com Database accession no. 6391031
- DATABASE GNPD [online] MINTEL; 8 March 2019 (2019-03-08), ANONYMOUS: "Cheese and Vegetable Burger", XP055728354, retrieved from www.gnpd.com Database accession no. 6391033

## Description

La présente invention, qui est définie par les revendications, concerne un procédé de fabrication d'un produit alimentaire comprenant une matière d'origine laitière et une matière d'origine végétale, comprenant au moins 50% en poids de légumineuse(s) en tout ou partie sous forme de graines. La présente invention concerne également un produit alimentaire hybride susceptible d'être obtenu par ce procédé, comprenant une matière d'origine laitière et une matière d'origine végétale, comprenant au moins 50% en poids de légumineuse(s) en tout ou partie sous forme de graines.

De nombreux produits fromagers existent, de même que des produits végétaux mais il existe peu d'exemples de produits hybrides comprenant une matière laitière et une matière végétale.

Le brevet FR2949644 décrit un procédé de fabrication d'un produit fromager ayant un extrait-sec ≤50%, composé d'un mélange de fromage fondu et d'au moins une céréale, ainsi qu'un produit fromager susceptible d'être obtenu par ce procédé. Le produit fromager se caractérise par une longue durée de conservation, c'est-à-dire une durée de conservation pouvant atteindre 4 mois à température ambiante.

Le brevet FR2968165 décrit un procédé de fabrication d'un produit laitier sucré ayant un extrait sec compris entre 30 % et 60 %, composé d'une base de fromage fondu et d'au moins une céréale, ainsi qu'un produit laitier sucré susceptible d'être obtenu par ce procédé. Le produit laitier sucré se caractérise par une longue durée de conservation, c'est-à-dire une durée de conservation pouvant atteindre 4 mois hors froid.

L'inconvénient de ces solutions de l'art antérieur est que les propriétés organoleptiques, notamment de goût, ne sont pas optimales et qu'il peut être nécessaire d'ajouter des arômes peu cohérents avec la liste d'ingrédients.

Les arômes et les agents de saveurs sont des additifs. Aujourd'hui les consommateurs sont de plus en plus vigilants concernant leur alimentation et ils sont de plus en plus rétifs à consommer des produits qui contiennent ce type d'additifs. Les consommateurs veulent de la naturalité.

Les consommateurs ont également une tendance à réduire la quantité d'aliments d'origine animale qu'ils intègrent dans leur alimentation.

En outre, les produits fromagers obtenus par les procédés décrits dans les brevets FR2949644 et FR2968165 n'ont pas une viscosité suffisante pour permettre de les conditionner facilement en portions car ces produits fromagers collent au matériau d'emballage, en particulier l'aluminium. Les produits doivent en effet répondre à une double contrainte : présenter une viscosité à chaud suffisante pour un conditionnement réalisé automatiquement en machine, et une texture à froid qui doit être suffisamment ferme et/ou gélifiée pour pourvoir extraire le produit de son emballage.

D'autres produits sont décrits par exemple dans WO 2016/184856 A1 ou sont disponibles dans le commerce, comme un burger végétarien au fromage (numéro 6391033 dans la base de données GNPD).

Or fabriquer des produits alimentaires facilement conditionnables ayant une bonne tenue de conservation, de texture et de goût, et dont la portion laitière est diminuée, à des cadences industrielles élevées tout en conservant de bonnes propriétés nutritionnelles est un challenge.

La présente invention se propose donc de pallier aux inconvénients de l'art antérieur par un procédé de fabrication d'un produit alimentaire comprenant une matière d'origine laitière et une matière d'origine végétale et produit alimentaire hybride comprenant une matière d'origine laitière et une matière d'origine végétale.

Le produit hybride, qui est susceptible d'être obtenu par le procédé décrit plus loin, comprend, en poids par rapport au poids total du produit :
a) 20 à 80% de portion ou matière laitière ; et
b) 10 à 80% de portion ou matière végétale, comprenant au moins 50% en poids de légumineuse(s) en tout ou partie sous forme de graines.

Selon un mode de réalisation, le produit alimentaire hybride comprend 20 à 80% de matière laitière et 20 à 80% de matière végétale.

Le produit hybride comprend en outre, en poids par rapport au poids total du produit:
a) 2 à 30% d'une matière grasse ajoutée, de préférence une matière grasse ajoutée d'origine végétale ;
b) 5 à 60% d'eau ; et
c) 0,1 à 15% d'agents d'aromatisation.

Dans un mode de réalisation, le produit alimentaire hybride comprend, en poids par rapport au poids total du produit:
a) 20 à 50% de matière laitière, de préférence 20 à 40% ;
b) 10 à 50% de matière végétale, de préférence 15 à 35% de matière végétale, comprenant au moins 50% en poids de légumineuse(s) en tout ou partie sous forme de graines ;
c) 5 à 20% de matière grasse ajoutée, de préférence une matière grasse ajoutée d'origine végétale ;
d) 20 à 50% d'eau ; et
e) 0,5 à 10% d'agents d'aromatisation.

Par « produit hybride », l'on comprend un produit alimentaire comprenant une matière d'origine animale, telle qu'une matière d'origine laitière, et une matière d'origine végétale, comprenant de préférence au moins 50% en poids de légumineuse(s) en tout ou partie sous forme de graines.

Le produit hybride selon l'invention présente une émulsion stable et une texture gélifiée, permettant un conditionnement facilité du produit sans coller à l'emballage. Ceci est particulièrement intéressant pour pouvoir conditionner ledit produit en portions, par exemple en portions aluminium. La viscosité et la texture du produit hybride sont semblables à celle d'un fromage fondu classiquement obtenu à partir de matières protéiques entièrement d'origine laitière, et comprenant typiquement de 9 à 14 %, en particulier 10%, de protéines laitières en fonction du Gras/sec.

Or, pour un fromage fondu classique, si la quantité de protéines laitières est diminuée, par exemple à 7%, le fromage fondu sera trop liquide et ne pourra pas être conditionné en portions ou collera au matériau de d'emballage de la portion (aluminium en particulier) au moment de la consommation. Pour compenser cette perte de viscosité, des épaississants type amidons modifiés peuvent être utilisés. Les amidons modifiés sont préférés car l'amidon natif a tendance à rétrograder ce qui entraine une synérèse du produit fini.

La matière végétale, notamment les légumineuses, incorporée dans le produit hybride selon l'invention contiennent de l'amidon natif. Or, contre toute attente, le produit hybride selon l'invention présente une viscosité et une texture semblables à celles d'un fromage fondu classique sans présenter de synérèse du fait de la rétrogradation de l'amidon natif.

Le produit hybride selon l'invention a une longue durée de conservation. La date limite d'utilisation optimale des produits hybrides selon l'invention est de 12 mois, de préférence 9 mois, encore plus préférentiellement 5 mois.

Dans un premier mode de réalisation, le produit hybride forme un produit alimentaire fini homogène en tout point, c'est-à-dire qu'il présente les mêmes propriétés organoleptiques sur toute sa masse.

Dans un second mode de réalisation, plusieurs couches de produit hybride de saveur et/ou de texture différentes sont empilées les unes sur les autres pour former un produit alimentaire fini complexe. De façon non limitative, un tel produit complexe serait obtenu par laminage ou dépôt successif des couches.

Dans un troisième mode de réalisation, le produit alimentaire hybride comprend un assemblage de produits hybrides à goût et/ou texture différent formant un produit alimentaire fini fourré, un produit hybride entourant un fourrage composé d'un produit hybride différent en goût et/ou en texture. Un tel produit hybride fourré serait de façon non limitative obtenu par extrusion ou co-extrusion.

La portion laitière (ou matière laitière) comprend des protéines laitières. Elle est choisie parmi le lait, les poudres de lait, le lait écrémé, la poudre de lait écrémé, le lait réhydratés, les rétentats, les laits concentrés, les produits laitiers fermentés tels que les skyr, les laits fermentés, et leurs dérivés en poudre, les fromages, les poudres de fromage, le caillé, les yaourts, les poudres de yaourts, les crèmes, les desserts lactés, les protéines de lait, les caséines, les caséinates, les concentrés de protéines laitières, les isolats de protéines de lait, les concentrés de protéines sériques, les isolats de protéines sériques et/ou d'un mélange de matières laitières.

Les fromages peuvent être des fromages à pâtes pressées, à pâtes pressées non cuites, à pâtes molles, à pâtes persillées, à pâte fraiche, à pâte filée, des fromages frais, des fromages affinés, des fromages fondus, des fromages frais fondus, et leurs dérivés ainsi que leurs dérivés sous forme de poudre.

Dans un mode de réalisation, si la matière laitière comprend du fromage fondu, il est préféré que le fromage fondu ne comprenne pas de sels de fonte et/ou d'additifs.

Dans un mode de réalisation, la matière laitière comprend en outre un apport en protéines laitières sous forme de poudres de lait, de poudres de fromage, de poudres de yaourts, de protéines de lait, de caséines, de caséinates, de concentrés protéiques laitiers, d'isolats de protéines de lait, de concentrés de protéines sériques, d'isolats de protéines sériques et/ou d'un mélange de celles-ci.

La portion végétale (ou matière végétale) comprend des protéines végétales. La matière végétale comprend en poids par rapport au poids total de la matière végétale, au moins 50%, de préférence au moins 70%, 80%, 90%, 95% de matière végétale d'une ou plusieurs légumineuse(s), ou est constituée à 100% de matière végétale d'une ou plusieurs légumineuse(s). La matière végétale de légumineuse(s) comprend des protéines.

La matière végétale est choisie parmi les céréales, des oléagineux, les légumineuses, les tubercules, les fruits, les légumes, les champignons, les algues, les microalgues, utilisées seules ou en mélange, et sous toute forme disponible sur le marché (poudre, liquide, non transformée, brute, purée, hydratée, cuite hydratée, pré-cuite, cuite séchée, farine...). Par exemple, la matière végétale qui comprend au moins 50% en poids de légumineuse(s) en tout ou partie sous forme de graines, peut comprendre - en complément jusqu'à 100% en poids- des céréales, des oléagineux, des tubercules, des fruits, des légumes, des champignons, des algues, ou des microalgues, ou leurs mélanges.

Selon un mode de réalisation la matière végétale comprend au moins 50% en poids de matière première végétale (en particulier de légumineuse(e)) sous forme cuite hydratée, et le reste sous une autre forme, par exemple farine, ou poudre, éventuellement hydratée, ou d'isolat protéique ou de concentré protéique. Un isolat protéique contient généralement au moins 80% de protéines sur la base du poids total de l'isolat (matière sèche) ; il est habituellement obtenu par un procédé d'extraction à l'eau. Un concentré protéique contient généralement de 50 à 60% de protéines, en poids par rapport au poids total du concentré ; il est habituellement obtenu par un procédé de séparation à l'air.

Selon un mode de réalisation, la matière végétale est entièrement constituée de légumineuse(s). Selon un mode de réalisation la matière végétale est entièrement constituée de matière première végétale sous forme cuite hydratée. Selon un mode de réalisation la matière végétale est constituée de matière première végétale sous forme cuite hydratée et de poudre d'isolat protéique ou de concentré protéique.

La matière végétale incorporée dans le produit hybride comprend de l'amidon natif.

Par « algues » et « microalgues », on entend dans la présente demande des organismes eucaryotes dépourvus de racine, de tige et de feuille, mais possédant de la chlorophylle ainsi que d'autres pigments accessoires à la photosynthèse productrice d'oxygène. Elles sont bleues, rouges, jaunes, dorées et brunes ou encore vertes.

Les microalgues au sens strict sont des algues microscopiques. Unicellulaires ou pluricellulaires indifférenciées, ce sont des micro-organismes photosynthétiques séparés en deux groupes polyphylétiques : les eucaryotes et les procaryotes. Vivant dans les milieux fortement aqueux, elles peuvent posséder une mobilité flagellaire. Selon un mode de réalisation, la matière végétale comprend une microalgue qui est la spiruline ou la chlorella.

Par « céréales », on entend dans la présente demande des plantes cultivées de la famille des graminées produisant des grains comestibles, comme par exemple le blé, l'avoine, le seigle, l'orge, le maïs, le sorgho, le riz. Les céréales sont souvent moulues sous forme de farine, mais se présentent aussi sous forme de grains et parfois sous forme de plante entière (fourrages).

Par « tubercules », on entend dans la présente demande tous les organes de réserve, généralement souterrains, qui assurent la survie des plantes pendant la saison d'hiver et souvent leur multiplication par voie végétative. Ces organes sont renflés par l'accumulation de substances de réserve. Les organes transformés en tubercules peuvent être :
- la racine : carotte, panais, manioc, konjac,
- le rhizome : pomme de terre, topinambour, crosne du Japon, patate douce, la base de la tige (plus précisément l'hypocotyle) : chou-rave, céleri-rave,
- l'ensemble racine et hypocotyle : betterave, radis.

Par « oléagineux », on désigne dans la présente demande les plantes cultivées spécifiquement pour leurs graines ou leurs fruits riches en matières grasses, dont on extrait de l'huile à usage alimentaire, énergétique ou industriel, comme par exemple le soja, colza, l'arachide, le tournesol, le sésame, le ricin.

Par « légumineuses », on entend, au sens de la présente invention, toutes plantes appartenant aux familles des césalpiniacées, des mimosacées ou des papilionacées et notamment toutes plantes appartenant à la famille des papilionacées comme, par exemple, le pois, le haricot, la fève, la fèverole, la lentille, la luzerne, le trèfle ou le lupin. Cette définition inclut notamment toutes les plantes décrites dans l'un quelconque des tableaux contenus dans l'article de R. HOOVER et al., 1991 (HOOVER R. (1991) « Composition, structure, functionality and chemical modification of légume starches : a review » Can. J. Physiol. Pharmacol., 69 pp. 79-92).

Les légumineuses sont par exemple choisies dans le groupe consistant en les pois, la luzerne, le trèfle, le lupin, le haricot, la fève, la fèverole, la lentille, des pois chiches, le soja, le pois chiche et d'un mélange de ces matières d'origine végétale.

Selon un mode de réalisation, la matière végétale est sélectionnée dans le groupe constitué du pois, des haricots, des lentilles, des pois chiches et/ou d'un mélange de ces matières protéiques d'origine végétale.

La ou les légumineuse(s) de la matière végétale sont incorporées en tout ou partie sous forme de graines, de préférence sous forme de graines hydratées (graines sèches trempées), de graines cuites-hydratées, de graines cuites et séchées (c'est à dire légumineuses précuites). La ou les légumineuse(s) de la matière végétale peuvent aussi être incorporées en tout ou partie sous forme de farine, de poudre d'isolat protéique ou de concentré protéique. Selon un mode de réalisation, la matière végétale de légumineuse(s) est incorporée sous forme d'un mélange de (i) graines, de graines hydratées, de graines cuites-hydratées, de graines cuites et séchées, ou de farine et de (ii) de poudre d'isolat protéique ou de concentré protéique. Par exemple la matière végétale de légumineuse(s) est incorporée sous forme d'un mélange comprenant en poids (i) 80-90% de graines hydratées, de graines cuites-hydratées, ou de graines cuites-hydratées et (ii) 10-20% de poudre d'isolat protéique ou de 15%-30% de concentré protéique.

La matière grasse ajoutée peut être d'origine animale ou d'origine végétale. La matière grasse ajoutée d'origine animale est préférentiellement une matière grasse d'origine laitière, par exemple du beurre, du beurre concentré, de la crème, de la matière grasse laitière anhydre (MGLA) ou un mélange de celles-ci. La matière grasse ajoutée d'origine végétale peut être choisie de façon non limitative parmi l'huile de soja, de tournesol, de palme, palmiste, de coprah, d'arachide, de coco, de maïs, de coton, d'olive, de cacao, de karité, de sal, de kokum, de mangue, de colza et toute huile végétale utilisée dans la fabrication de produits alimentaires et disponible sur le marché, utilisées seules ou en mélange. Lorsque la matière grasse ajoutée est d'origine végétale, cette proportion de matière grasse ne rentre pas dans la composition de la portion végétale mentionnée plus haut, la ou les matière(s) composant la portion ou matière végétale devant contenir des protéines.

Les agents d'aromatisation sont de préférence et non limitativement des épices et/ou des aromates issus par exemple d'écorces, de fleurs, de feuilles, de fruits, de bulbes, de graines, des fruits à coques, du chocolat, du thé, du café, de la chicorée ou de plantes aromatiques ou herbes aromatiques choisis de façon non limitative et à titre d'exemple parmi ceux communément utilisés et bien connus tels que le curcuma, le paprika, le piment, la cannelle, le gingembre, le safran, le poivre, le curry, le piment, la moutarde, l'ail, le romarin, les fines herbes, le thym, la sauge seul ou en mélange.

Dans un mode de réalisation, le produit hybride ne comprend pas de sel de fonte, ou d'agent texturant (gélifiant ou épaississant), ou de sel de fonte et d'agent texturant. Dans un autre mode de réalisation, le produit hybride comprend au moins un sel de fonte, un agent texturant (gélifiant ou épaississant), ou un sel de fonte et un agent texturant. Selon encore un autre mode de réalisation, le produit hybride ne comprend pas de sel de fonte mais comprend un agent texturant (gélifiant ou épaississant), ou le produit hybride ne comprend pas d'agent texturant (gélifiant ou épaississant) mais comprend un sel de fonte. Le cas échéant, le produit hybride contient, en poids par rapport au poids total du produit hybride, au maximum 4%, de préférence au maximum 3,5%, 1,5%, ou encore 1% de sels de fonte. Le cas échéant, le produit hybride contient, en poids par rapport au poids total du produit hybride, au maximum 3%, de préférence au maximum 1%, 0,5% ou encore 0,2% d'agents texturant.

Dans un mode de réalisation de l'invention, le produit hybride comprend de l'eau ajoutée, entre 5 et 60 % en poids total du produit fini, de préférence entre 20 et 50% en poids total du produit fini.

Les produits hybrides comprennent entre 8 et 21 grammes de protéines par 100 grammes de produit fini. L'apport de protéines par la matière d'origine laitière est compris entre 7 et 14 g pour 100 g de produit fini. L'apport de protéines par la matière d'origine végétale est compris entre 1 et 7 g pour 100 g de produit fini.

Les protéines sont apportées par la matière d'origine laitière et la matière d'origine végétale. Dans un mode de réalisation, on peut compléter l'apport protéique par des protéines de lait, des concentrés de protéines de lait, des isolats de protéines de lait, des concentrés de protéines sériques, des isolats de protéines sériques, des caséines, des caséinates, des concentrés protéiques d'origines végétales comme par exemple les isolats et/ou farines de pois, de soja, de pois chiches, de chanvre, de riz, de lupin, de citrouille, d'amande, et/ou un mélange de ceux-ci.

Avantageusement, l'extrait sec du produit alimentaire hybride selon l'invention est de 25 à 60 en pourcentage du poids du produit fini.

Avantageusement, le taux de gras sur sec du produit alimentaire hybride selon l'invention est de 20 à 60 en pourcentage du poids du produit fini.

Avantageusement, le produit alimentaire hybride selon l'invention comprend de 2 à 40 % de graisses, en pourcentage du poids du produit fini.

Avantageusement, le produit alimentaire hybride selon l'invention comprend de 1 à 30 % de glucides, en pourcentage du poids du produit fini.

Avantageusement, le produit alimentaire hybride selon l'invention apporte de 80 à 500 kilocalories par 100 grammes de produit fini.

Le procédé de fabrication d'un produit alimentaire comporte les étapes suivantes :
a) pré-cuisson des matières premières entrant dans la composition des produits définis ci-dessus, c'est-à-dire d'un mélange comprenant, en poids par rapport au poids total du mélange, de 20 à 80% de matière laitière et de 20 à 80% de matière végétale comprenant au moins 50% en poids de légumineuse(s) en tout ou partie sous forme de graines, à des fortes vitesses de rotation, qui sont comprises entre 500 et 3000 tours par minute à une température supérieure ou égale à 65°C pendant 1 à 10 minutes ;
b) cuisson à une vitesse de rotation comprise entre 500 et 3000 tours par minute, à une température supérieure ou égale à 75°C pendant 1 à 20 minutes ;
c) refroidissement du mélange pour atteindre une température inférieure à 98°C ;
d) conditionnement du mélange en portion(s) ou en barquette(s) (selon les volumes désirés).

Selon un mode de réalisation, le mélange comprend en outre 2 à 30% d'une matière grasse ajoutée, de préférence une matière grasse ajoutée d'origine végétale, 5 à 60% d'eau ; et 0,1 à 15% d'agents d'aromatisation, en poids par rapport au poids total du mélange.

De préférence, le mélange comprend, en poids par rapport au poids total du mélange :
a) 20 à 50%, de matière laitière, de préférence 20 à 40% ;
b) 10 à 50% de matière végétale, de préférence 15 à 35% ;
c) 5 à 20% de matière grasse ajoutée, de préférence une matière grasse ajoutée d'origine végétale ;
d) 20 à 50% d'eau ; et
e) 0,5 à 10% d'agents d'aromatisation.

Les matières laitière et végétale, matière grasse ajoutée et agents d'aromatisation sont tels que définis plus haut.

Le procédé est mis en œuvre dans un équipement classique tel que des appareils de cuisson en batch de type cutter (par exemple ceux commercialisés sous marque Stephan^{®}) ou des appareils de traitement thermique en continu de type stérilisateur UHT, ou encore des appareils de type pétrin, mélangeur, malaxeur, cuiseur-mélangeur, co-malaxeur, extrudeur. La vitesse de rotation lors de la pré-cuisson, de la cuisson, ou de chacune des étapes de pré-cuisson et cuisson, est comprise entre 500 et 3000 tours par minute, de préférence 1000 à 2000 tours par minute, typiquement environ 1500 tours par minute.

L'étape de pré-cuisson est généralement précédée d'une étape de mélange ou de pré-broyage. Cette étape permet avantageusement de bien mélanger la matière végétale comprenant au moins 50% en poids de légumineuse(s) en tout ou partie sous forme de graines avec la matière laitière, avant pré-cuisson. Cette étape peut en outre être nécessaire si la matière laitière comprend un ou des fromages à pâte pressée ou à pâtes pressée non cuite. Ce mélange ou pré-broyage est typiquement réalisé à température ambiante. Il est typiquement mis en œuvre avec une vitesse de rotation comprise entre 500 et 3000 tours par minute, de préférence 1000 à 2000 tours par minute, typiquement environ 1500 tours par minute, par exemple pendant 10 secondes à 2 minutes, notamment 20 secondes à 1 minute.

La température de cuisson est supérieure à la température de pré-cuisson. Par exemple, la température de pré-cuisson est de 65°C à 75°C, de préférence 68°C à 72°C. De préférence, la température de cuisson est de 75°C à 145°C, de préférence de 80°C à 140°C, de préférence encore de 100°C à 130°C.

La durée de la pré-cuisson est de 1 à 10 minutes, de préférence de 1 à 3 minutes. La durée de la cuisson est de 1 à 20 minutes, de préférence de 2 à 10 minutes, de préférence encore de 2 à 6 minutes.

Selon un mode de réalisation, un chambrage est mis en œuvre après l'étape de pré-cuisson, après l'étape de cuisson, ou après chacune des étapes de pré-cuisson ou cuisson. Le chambrage consiste à maintenir constante la température du mélange, par exemple à la vitesse de rotation de l'étape de pré-cuisson si le chambrage suit la pré-cuisson, ou par exemple à la vitesse de rotation de l'étape de cuisson si le chambrage suit la cuisson. Ainsi au cours du chambrage l'agitation est réalisée à une vitesse de rotation de 500 et 3000 tours par minute, de préférence 1000 à 2000 tours par minute, typiquement environ 1500 tours par minute. Le chambrage dure typiquement au plus 2 ou 3 minutes, de préférence de 1 à 2 minutes.

La cuisson peut être réalisée :
- en process en continu à une température de 90°C à 145°C avec un temps de chambrage de 3 à 20 secondes, ou
- en process par batch, par exemple dans un cuiseur de type cutter Stephan, à une température comprise de 80°C à 120°C en process batch avec une durée de cuisson de 2 à 10 minutes et un temps de chambrage de 0 à 2 minutes.

Lors de l'étape de refroidissement, la température est abaissée par rapport à la température de cuisson pour atteindre une température au moins inférieure à 98°C. De préférence, le refroidissement est réalisé jusqu'à la température à laquelle le produit hybride est ensuite conditionné, par exemple une température de 70°C à 98°C, de préférence de 75°C à 95°C, plus préférentiellement encore entre 75°C et 90°C.

Le produit hybride fini peut être emballé sous différents conditionnements : pot, barquette, sachet souple, tranches, portions, dosette, boudins, etc... Selon un mode de réalisation, le produit hybride est conditionné en portions, de préférence en portions de 4 à 100 g de produit hybride. Selon un mode de réalisation, les portions sont de type portions aluminium. Alternativement, les portions sont de type portions plastique, portions papier ou portions conditionnées dans un matériau complexe.

Dans un même conditionnement, on peut doser des produits homogènes en goût et en texture ou doser différentes couches de produit, de goût, de texture, de couleur différente. On peut également envisager une alternance d'au moins une couche de produit hybride différent selon l'invention ou d'au moins une couche de fromage fondu ou autre.

De préférence, le produit est conditionné à chaud à plus de 70°C afin d'obtenir une sécurité alimentaire optimale et une durée de conservation de plus de 3 mois, de préférence de plus de 4 mois à température ambiante.

Le produit hybride obtenu peut avoir des usages variés : à croquer, à tartiner, à sucer, à trancher.

### FIGURES

La Figure 1 montre la mesure de viscosité à 25°C des produits fromagers A-D selon l'exemple 2.
La Figure 2 montre la mesure de viscosité à 80°C des produits fromagers A-D selon l'exemple 2.

### EXEMPLES

### Exemple 1 : Exemples de composition d'un produit alimentaire hybride selon l'invention

### LENTILLES & CURRY

Eau, lentilles vertes cuites, fromage, huile de tournesol, protéines de lait, sels de fonte (polyphosphates, phosphates de calcium), curry, agent gélifiant : carraghénanes, acidifiant : acide citrique, sel.

### POIS CHICHES & HERBES

Eau, pois-chiches cuits, fromage, huile de tournesol, protéines de lait, sels de fonte (polyphosphates, phosphates de calcium), persil, ail, agent gélifiant : carraghénanes, acidifiant : acide citrique, sel, cumin.

### HARICOTS ROUGES & PAPRIKA

Eau, haricots rouges cuits, fromage, huile de tournesol, protéines de lait, concentré de tomate, poivrons rouges, sels de fonte (polyphosphates, phosphates de calcium), épices, agent gélifiant : carraghénanes, sel, poivre de Cayenne.

Les exemples de réalisation ci-dessus sont sur une base de matière laitière comprenant majoritairement les ingrédients d'un fromage fondu et de matière végétale comprenant majoritairement des légumineuses.

Dans un mode alternatif de réalisation, la matière laitière comprend majoritairement un fromage fondu sans sels de fonte et le produit hybride obtenu ne comprend pas d'additif, c'est-à-dire aucun agent de texture ou de saveur ou de conservateur. Un tel produit hybride présente l'avantage de contenir aucun additif ce qui le rend plus naturel.

Les propriétés nutritionnelles des produits hybrides, selon les exemples de composition ci-dessus, sont telles que suit :

**Table 1 : propriétés nutritionnelles des produits hybrides selon les exemples**

| | **Pois chiches et herbes** | | **Lentilles & curry** | | **Haricots rouges & paprika** | |
|---|---|---|---|---|---|---|
| | 100g | Portion (21g) | 100g | Portion (21g) | 100g | Portion (21g) |
| **Extrait sec (%)** | **36,0** | | **36,0** | | **35,5** | |
| **Gras/sec** (%) | **44,0** | | **44,0** | | **33,5** | |
| Energie (kcal) | 210 | 44,0 | 200 | 42,0 | 181 | 38,0 |
| **Gras (g)** | **16,0** | **3,5** | **16,0** | **3,5** | **12,0** | **2,5** |
| Gras saturé (g) | 3,0 | 0,5 | 3,0 | 0,5 | 2,5 | 0,5 |
| **Glucides (g)** | **5,0** | **1,0** | **3,5** | **1,0** | **6,5** | **1,5** |
| Sucres (g) | 0,5 | 0,0 | 0,5 | 0,0 | 3,0 | 0,5 |
| **Protéines (g)** | **11,0** | **2,4** | **10,5** | **2,0** | **11,0** | **2,5** |
| **Fibres (g)** | **1,5** | **0,5** | **1,0** | **0,0** | **2,0** | **0,5** |
| **Sodium (mg)** | **750** | **160** | **750** | **160** | **760** | **160** |
| **Calcium (mg)** | **600** | **120** | **600** | **120** | **600** | **120** |

Les produits obtenus par la présente invention ont la particularité d'être riches en calcium par rapport à des produits 100% végétaux, grâce à la matière laitière. La combinaison des protéines apportées par la matière laitière et la matière végétale permet d'obtenir des produits ayant une bonne texture et de bons apports nutritionnels.

Les produits hybrides obtenus comprennent en outre des fibres.

Avantageusement, les produits hybrides obtenus sont en outre pauvre en acides gras saturés. Un profil pauvre en acide gras est important pour préserver la santé des consommateurs, notamment des maladies cardiovasculaires.

Les produits alimentaires hybrides présentent l'avantage de contenir beaucoup moins d'acides gras saturés par rapport à un fromage fondu classique, ce qui les différencient des solutions de l'art antérieur. Classiquement, un fromage fondu comprend entre 60 et 65% d'acides gras saturés en pourcentage du poids total du produit fini. Le produit alimentaire hybride selon l'invention comprend quant à lui entre 5 et 20% d'acide gras saturés, de préférence 8 à 15% d'acides gras saturés en pourcentage du poids total du produit fini.

Les produits sont également sans gluten.

Le choix des matières premières composant notamment les matières laitières et les matières végétales permettent de combiner à l'infini les possibilités et d'obtenir une palette très riche et infinie de goûts et de texture par le procédé de fabrication et de conditionnement. Le produit hybride obtenu est adaptable à tous les consommateurs et à toutes les cultures. Il est également facilement consommable à l'occasion d'un snack ou d'un encas dans la rue, au travail ou à l'école, notamment s'il est conditionné en portion, mais il peut également être consommé au cours d'un repas traditionnel, à la maison ou en restauration collective, qu'il soit conditionné en portion ou en barquette ou dans tout autre mode de conditionnement.

### Exemple 2 : Effet de la matière protéique végétale sur la viscosité du produit hybride

Quatre produits fromagers ont été préparés selon un même procédé de fabrication. La composition des quatre produits fromagers et leurs caractéristiques en matière sèche et gras sont détaillés dans la Table 2.

**Table 2 : composition des quatre produits fromagers et leurs caractéristiques en matière sèche et gras**

| **Produit fromager** | **Matière sèche (%)** | **gras (%)** | **Protéines laitières (%)** | **amidon (%)** | **Pois chiches (%)** |
|---|---|---|---|---|---|
| A | | 15,37 | 7 | 0 | 25 |
| B | 37,4 | 17,6 | 7 | 2 | 0 |
| C | | 17,6 | 9,6 | 0 | 0 |
| D | | 19,1 | 7,1 | 0 | 0 |

Le produit fromager C correspond à un fromage fondu classique, comprenant 10% de protéines entièrement d'origine laitière.

Le produit fromager D correspond à un fromage fondu 100% laitier ayant une teneur réduite en protéines (7,1%) toujours entièrement d'origine laitière.

Le produit fromager B correspond à un fromage fondu ayant une teneur réduite en protéines (7%) entièrement d'origine laitière et supplémenté en épaississant (amidon 2%).

Le produit fromager A est un produit hybride selon l'invention ayant une teneur réduite en protéines laitières (7%) et comprenant 25% de pois chiches cuits-hydratés. Pour les besoins de la comparaison, le produit fromager A comprend des carraghénanes et sels de fonte, comme les produits fromagers B à D.

Il est à noter que le gélifiant (carraghénanes) incorporé dans la composition des produits fromagers n'a pas de contribution à la texture du mélange au cours du procédé de fabrication puisqu'il est soluble à la température de dosage. Les carraghénanes et sels de fonte sont incorporés dans la composition des produits fromagers A, B et D de manière à évaluer le seul effet de la variation de la composition protéique

La composition détaillée des ingrédients utilisés pour préparer les produits fromagers est décrite dans la Table 3.

Le procédé de fabrication utilise un cutter Stephan et comprend :
Pré-broyage avec une vitesse de rotation de 1500 rpm pendant 30 secondes ;
Pre-cuisson à une température de 70°C pendant 3 minutes, avec une vitesse de rotation de 1500 rpm ;
Cuisson à une température de 110°C pendant 3 minutes, avec une vitesse de rotation de 1500 rpm ;
Chambrage pendant 1 minute avec une vitesse de rotation de 1500 rpm ;
Refroidissement à une température inférieure à 98°C, si besoin, et dosage.

**Table 3 : Composition détaillée des produits fromagers A à D.**

| | Produit A | | Produit B | | Produit C | | Produit D | |
|---|---|---|---|---|---|---|---|---|
| Matière laitière | fromage | 4,13% | fromage | 10,92% | fromage | 10,77% | fromage | 9,33% |
| | Poudres laitières | 11,91% | Poudres laitières | 11,68% | Poudres laitières | 13,85% | Poudres laitières | 12,51 % |
| Matière végétale | Pois chiches | 25% | | | | | | |
| Matière grasse végétale | | 14,00% | | 14,00% | | 14,00% | | 16,00% |
| Epaississant | | | Amidon modifié | 2,00% | | | | |
| Sels de fonte | Sels de fonte | 3,09% | Sels de fonte | 3,35% | Sels de fonte | 3,20% | Sels de fonte | 3,35% |
| Gélifiant | Carraghénane | 0,10% | Carraghénane | 0,10% | Carraghénane | 0,10% | Carraghénane | 0,10% |
| | Sel fin | 0,14% | Sel fin | 0,14% | Sel fin | 0,14% | Sel fin | 0,14% |
| Eau | | 41,63% | | 57,81 % | | 57,93% | | 58,58% |

Les caractéristiques texturales des produits fromagers sont telles que suivent :
Session de dégustation :
   produit fromager A : viscosité normale et consistance conforme par rapport à un fromage fondu classique ;
   produit fromager B : viscosité normale et consistance conforme par rapport à un fromage fondu classique ;
   produit fromager C : viscosité normale et consistance conforme par rapport à un fromage fondu classique ;
   produit fromager D : aucune consistance et très mou.
Mesures de viscosité :
   La viscosité est mesurée à l'aide d'un appareil Matériel Rheolab QC (de la marque Anton Paar), à une température fixe pendant la mesure : 80°C ou 25°C en fonction de l'analyse souhaitée.
   Un pré-cisaillement est mis en œuvre pendant 60 secondes, puis la mesure de rhéologie est réalisée selon un protocole comprenant une phase de montée en cisaillement de 1 à 100 s⁻¹, une phase de stabilisation à 100 s⁻¹, et une phase de descente en cisaillement de 100 à 1 s⁻¹.
   L'exploitation des données est faite par Excel avec des régressions linéaires des points obtenus.

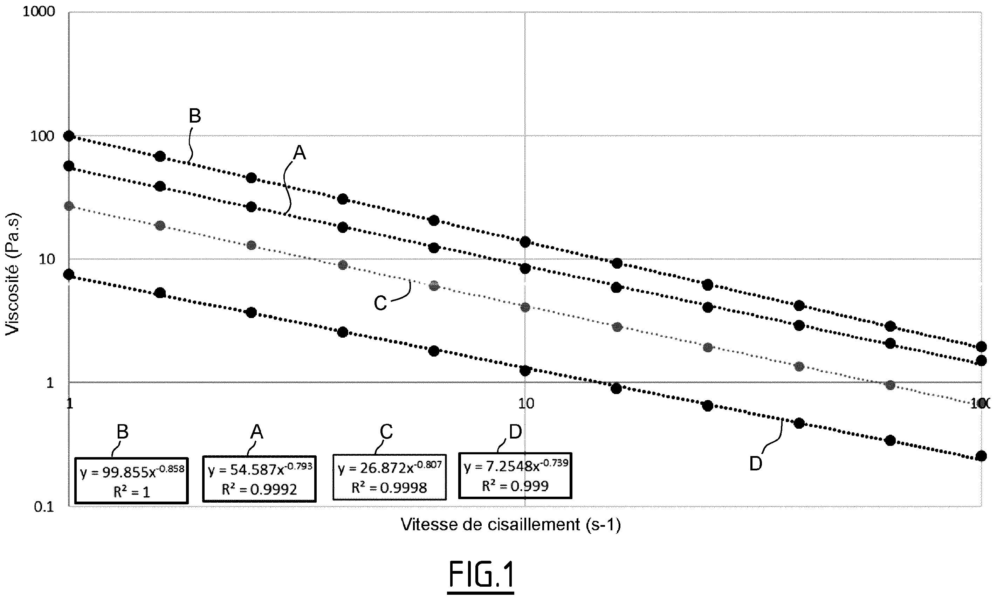

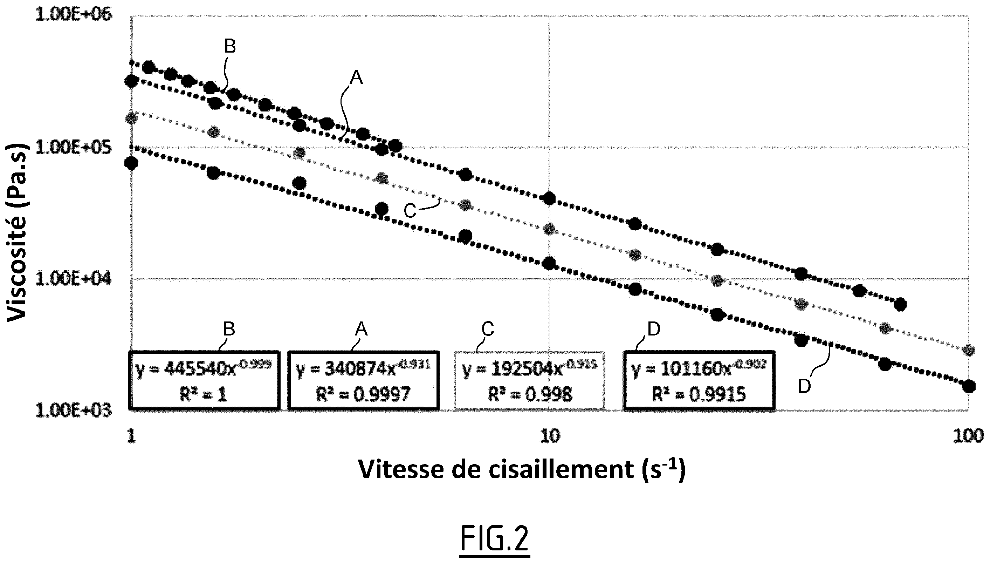

Les mesures de viscosité à 25°C et 80°C (Fig. 1 et Fig. 2) montrent que les produits fromagers se classent comme suit, par ordre de viscosité croissante : D < C < A < B.

### Analyse texturale :

L'analyse pénétrométrique est réalisée à l'aide d'un appareil LFRA Texture analyser (de la marque CNS Farhell). La sonde cylindrique utilisée a un diamètre de 6,35 mm et descend dans le produit à une vitesse de 0,2 mm/sec, sur une distance de 7mm, avec une valeur de déclenchement de 0,5 g. La valeur maximale est retenue (pic).

**Table 4 : Résultats d'analyse texturale des produits fromagers A à D.**

| Produit fromager | Analyse texturale |
|---|---|
| A | 29 |
| C | 33 |
| B | 20 |
| D | 8 |

L'ensemble de ces analyses montre que le produit fromager A, contenant le mélange de matière laitière et de matière végétale, présente des caractéristiques très proches de celles d'un fromage fondu classique.

## Revendications

1. Procédé de fabrication d'un produit alimentaire comprenant :
a) pré-cuisson d'un mélange comprenant, en poids par rapport au poids total du mélange, de 20 à 80% de matière laitière et de 10 à 80% de matière végétale comprenant au moins 50% en poids de légumineuse(s) en tout ou partie sous forme de graines, à une vitesse de rotation de 500 et 3000 tours par minute, à une température supérieure ou égale à 65°C, pendant 1 à 10 minutes ;
b) cuisson à une vitesse de rotation comprise entre 500 et 3000 tours par minute, à une température supérieure ou égale à 75°C, pendant 1 à 20 minutes ;
c) refroidissement du mélange pour atteindre une température inférieure à 98°C ; et
d) conditionnement du mélange en portion(s) ou en barquette(s).

2. Procédé selon la revendication 1, dans lequel le mélange comprend en outre 2 à 30% d'une matière grasse ajoutée, de préférence une matière grasse ajoutée d'origine végétale, 5 à 60% d'eau ; et 0,1 à 15% d'agents d'aromatisation, en poids par rapport au poids total du mélange.

3. Procédé selon la revendication 1 ou 2, dans lequel le mélange comprend, en poids par rapport au poids total du mélange :
a) 20 à 50%, de matière laitière, de préférence 20 à 40% ;
b) 10 à 50% de matière végétale, de préférence 15 à 35% de matière végétale, comprenant au moins 50% en poids de légumineuse(s) en tout ou partie sous forme de graines ;
c) 5 à 20% de matière grasse ajoutée, de préférence une matière grasse ajoutée d'origine végétale ;
d) 20 à 50% d'eau ; et
e) 0,5 à 10% d'agents d'aromatisation.

4. Procédé selon l'une quelconque des revendications 1 à 3, dans lequel la matière végétale comprend, en poids par rapport au poids total de la matière végétale, au moins 70%, 80%, 90%, ou 95% de matière végétale d'une ou plusieurs légumineuse(s) en tout ou partie sous forme de graines.

5. Procédé selon l'une quelconque des revendications 1 à 4, dans lequel la matière végétale est constituée à 100% de matière végétale d'une ou plusieurs légumineuse(s) en tout ou partie sous forme de graines.

6. Procédé selon l'une quelconque des revendications 1 à 5, dans lequel la ou les légumineuse(s) en tout ou partie sous forme de graines sont incorporées sous forme d'un mélange de graines, de préférence sous forme de graines hydratées, de graines cuites-hydratées, ou de graines cuites et séchées.

7. Procédé selon l'une quelconque des revendications 1 à 5, dans lequel la matière végétale de légumineuse(s) en tout ou partie sous forme de graines est incorporée sous forme d'un mélange de (i) graines, de graines hydratées, de graines cuites-hydratées, ou de graines cuites et séchées, et de (ii) poudre d'isolat protéique ou de concentré protéique.

8. Procédé selon l'une quelconque des revendications 1 à 7, dans lequel la cuisson est réalisée en continu à une température comprise de 90 à 145°C avec un temps de chambrage de 3 à 20 secondes.

9. Procédé selon l'une quelconque des revendications 1 à 8, dans lequel la cuisson est réalisée en batch à une température comprise de 80 à 120°C, avec une durée de cuisson de 2 à 10 minutes et un temps de chambrage de 0 à 2 minutes.

10. Produit alimentaire susceptible d'être obtenu par le procédé selon l'une quelconque des revendications précédentes, comprenant, en poids par rapport au poids total du produit:
a) 20 à 80% de matière laitière;
b) 10 à 80% de matière végétale comprenant au moins 50% en poids de légumineuse(s) en tout ou partie sous forme de graines.

11. Produit alimentaire selon la revendication 10, comprenant, en poids par rapport au poids total du produit:
a) 2 à 30% d'une matière grasse ajoutée, de préférence une matière grasse ajoutée d'origine végétale ;
b) 5 à 60% d'eau ; et
c) 0,1 à 15% d'agents d'aromatisation.

12. Produit alimentaire selon la revendication 10 ou 11, comprenant, en poids par rapport au poids total du produit:
a) 20 à 50%, de matière laitière, de préférence 20 à 40% ;
b) 10 à 50% de matière végétale, de préférence 15 à 35% de matière végétale, comprenant au moins 50% en poids de légumineuse(s) en tout ou partie sous forme de graines ;
c) 5 à 20% de matière grasse ajoutée, de préférence une matière grasse ajoutée d'origine végétale ;
d) 20 à 50% d'eau ; et
e) 0,5 à 10% d'agents d'aromatisation.

13. Produit alimentaire selon l'une quelconque des revendications 10 à 12, ayant un extrait sec de 25 à 60 %, en pourcentage du poids du produit.

14. Produit alimentaire selon l'une quelconque des revendications 10 à 13, ayant un taux de gras sur sec de 20 à 60 %, en pourcentage du poids du produit.

15. Produit alimentaire selon l'une quelconque des revendications 10 à 14, dans lequel la matière végétale comprend, en poids par rapport au poids total de matière végétale, au moins 70%, 80%, 90%, ou 95% de matière végétale d'une ou plusieurs légumineuse(s) en tout ou partie sous forme de graines.

16. Produit alimentaire selon l'une quelconque des revendications 10 à 15, dans lequel la ou les légumineuse(s) en tout ou partie sous forme de graines sont incorporées sous forme de graines, de préférence sous forme de graines hydratées, de graines cuites-hydratées, ou de graines cuites et séchées.

17. Produit alimentaire selon l'une quelconque des revendications 10 à 16, dans lequel la matière végétale de légumineuse(s) en tout ou partie sous forme de graines est incorporée sous forme d'un mélange de (i) graines, de graines hydratées, de graines cuites-hydratées, de graines cuites et séchées, ou de farine, et de (ii) poudre d'isolat protéique ou de concentré protéique.

## Patentansprüche

1. Verfahren zur Herstellung eines Lebensmittelprodukts, umfassend:
a) Vorkochen eines Gemischs, das, bezogen auf das Gesamtgewicht des Gemischs, 20 bis 80 Gewichts-% Milch und 10 bis 80 Gewichts-% pflanzliches Material, umfassend mindestens 50 Gewichts-% Hülsenfrüchte, gänzlich oder teilweise in Form von Samen, umfasst, bei einer Rotationsgeschwindigkeit von 500 und 3000 Umdrehungen pro Minute, bei einer Temperatur von 65 °C oder höher über 1 bis 10 Minuten;
b) Kochen bei einer Rotationsgeschwindigkeit umfassend zwischen 500 und 3000 Umdrehungen pro Minute bei einer Temperatur von 75 °C oder höher über 1 bis 20 Minuten;
c) Abkühlen des Gemischs, um eine Temperatur unter 98 °C zu erreichen; und
d) Verpacken des Gemischs in Portion(en) oder in Schale(n).

2. Verfahren nach Anspruch 1, wobei das Gemisch ferner 2 bis 30 Gewichts-% eines hinzugefügten Fetts, vorzugsweise eines hinzugefügten Fetts pflanzlichen Ursprungs, 5 bis 60 Gewichts-% Wasser; und 0,1 bis 15 Gewichts-% Aromastoffe, bezogen auf das Gesamtgewichts des Gemischs, umfasst.

3. Verfahren nach Anspruch 1 oder 2, wobei das Gemisch bezogen auf das Gesamtgewicht des Gemischs Folgendes umfasst:
a) 20 bis 50 Gewichts-%, vorzugsweise 20 bis 40 Gewichts-%, Milch;
b) 10 bis 50 Gewichts-% pflanzliches Material, vorzugsweise 15 bis 35 Gewichts-% pflanzliches Material, umfassend mindestens 50 Gewichts-% Hülsenfrüchte, gänzlich oder teilweise in Form von Samen;
c) 5 bis 20 Gewichts-% hinzugefügtes Fett, vorzugsweise ein hinzugefügtes Fett pflanzlichen Ursprungs;
d) 20 bis 50 Gewichts-% Wasser; und
e) 0,5 bis 10 Gewichts-% Aromastoffe.

4. Verfahren nach einem der Ansprüche 1 bis 3, wobei das pflanzliche Material, bezogen auf das Gesamtgewicht des pflanzlichen Materials, mindestens 70 Gewichts-%, 80 Gewichts-%, 90 Gewichts-% oder 95 Gewichts-% pflanzliches Material einer oder mehrerer Hülsenfrüchte, gänzlich oder teilweise in Form von Samen, umfasst.

5. Verfahren nach einem der Ansprüche 1 bis 4, wobei das pflanzliche Material zu 100 % aus pflanzlichem Material einer oder mehrerer Hülsenfrüchte, gänzlich oder teilweise in Form von Samen, besteht.

6. Verfahren nach einem der Ansprüche 1 bis 5, wobei die Hülsenfrüchte, gänzlich oder teilweise in Form von Samen, in Form eines Gemischs von Samen integriert sind, vorzugsweise in Form von hydratisierten Samen, gekochten-hydratisierten Samen oder gekochten und getrockneten Samen.

7. Verfahren nach einem der Ansprüche 1 bis 5, wobei das pflanzliche Material von Hülsenfrüchten, gänzlich oder teilweise in Form von Samen, in Form eines Gemischs aus (i) Samen, hydratisierten Samen, gekochten-hydratisierten Samen oder gekochten und getrockneten Samen, und (ii) Proteinisolatpulver oder Proteinkonzentrat integriert wird.

8. Verfahren nach einem der Ansprüche 1 bis 7, wobei das Kochen kontinuierlich bei einer Temperatur umfassend von 90 bis 145 °C mit einer Chambrierzeit von 3 bis 20 Sekunden durchgeführt wird.

9. Verfahren nach einem der Ansprüche 1 bis 8, wobei das Kochen in einer Charge bei einer Temperatur umfassend von 80 bis 120 °C mit einer Kochdauer von 2 bis 10 Minuten und einer Chambrierzeit von 0 bis 2 Minuten durchgeführt wird.

10. Lebensmittelprodukt, das durch das Verfahren nach einem der vorherigen Ansprüche erlangbar ist, umfassend, bezogen auf das Gesamtgewicht des Produkts:
a) 20 bis 80 Gewichts-% Milch;
b) 10 bis 80 Gewichts-% pflanzliches Material, umfassend mindestens 50 Gewichts-% Hülsenfrüchte, gänzlich oder teilweise in Form von Samen.

11. Lebensmittelprodukt nach Anspruch 10, umfassend, bezogen auf das Gesamtgewicht des Produkts:
a) 2 bis 30 Gewichts-% eines hinzugefügten Fetts, vorzugsweise eines hinzugefügten Fetts pflanzlichen Ursprungs;
b) 5 bis 60 Gewichts-% Wasser; und
c) 0,1 bis 15 Gewichts-% Aromastoffe.

12. Lebensmittelprodukt nach Anspruch 10 oder 11, umfassend, bezogen auf das Gesamtgewicht des Produkts:
a) 20 bis 50 Gewichts-% Milch, vorzugsweise 20 bis 40 Gewichts-%;
b) 10 bis 50 Gewichts-% pflanzliches Material, vorzugsweise 15 bis 35 Gewichts-% pflanzliches Material, umfassend mindestens 50 Gewichts-% Hülsenfrüchte, gänzlich oder teilweise in Form von Samen;
c) 5 bis 20 Gewichts-% hinzugefügtes Fett, vorzugsweise ein hinzugefügtes Fett pflanzlichen Ursprungs;
d) 20 bis 50 Gewichts-% Wasser; und
e) 0,5 bis 10 Gewichts-% Aromastoffe.

13. Lebensmittelprodukt nach einem der Ansprüche 10 bis 12, das einen Trockenextrakt von 25 bis 60 %, in Gewichtsprozent des Produkts, aufweist.

14. Lebensmittelprodukt nach einem der Ansprüche 10 bis 13, das einen Fettgehalt in der Trockenmasse von 20 bis 60 %, in Gewichtsprozent des Produkts, aufweist.

15. Lebensmittelprodukt nach einem der Ansprüche 10 bis 14, wobei das pflanzliche Material, bezogen auf das Gesamtgewicht des pflanzlichen Materials, mindestens 70 Gewichts-%, 80 Gewichts-%, 90 Gewichts-% oder 95 Gewichts-% pflanzliches Material einer oder mehrerer Hülsenfrüchte, gänzlich oder teilweise in Form von Samen, umfasst.

16. Lebensmittelprodukt nach einem der Ansprüche 10 bis 15, wobei die Hülsenfrüchte, gänzlich oder teilweise in Form von Samen, in Form von Samen integriert sind, vorzugsweise in Form von hydratisierten Samen, gekochten-hydratisierten Samen oder gekochten und getrockneten Samen.

17. Lebensmittelprodukt nach einem der Ansprüche 10 bis 16, wobei das pflanzliche Material von Hülsenfrüchten, gänzlich oder teilweise in Form von Samen, in Form eines Gemischs aus (i) Samen, hydratisierten Samen, gekochten-hydratisierten Samen, gekochten und getrockneten Samen oder Mehl und (ii) Proteinisolatpulver oder Proteinkonzentrat integriert wird.

## Claims

1. A method for manufacturing a food product, comprising:
a) pre-cooking a mixture comprising, by weight relative to the total weight of the mixture, from 20 to 80% of dairy matter and from 10 to 80% of plant matter, the plant matter comprising at least 50% by weight of legume(s), wholly or partly in the form of seeds, at a rotation speed of 500 to 3000 revolutions per minute, at a temperature greater than or equal to 65°C, for 1 to 10 minutes;
b) cooking at a rotation speed of 500 to 3000 revolutions per minute, at a temperature greater than or equal to 75°C, for 1 to 20 minutes;
c) cooling the mixture so as to reach a temperature below 98°C; and
d) packaging the mixture into portion(s) or tray(s).

2. The method according to claim 1, wherein the mixture further comprises, by weight relative to the total weight of the mixture, 2 to 30% of an added fat matter, preferably an added fat matter of plant origin, 5 to 60% of water, and 0.1 to 15% of flavouring agents.

3. The method according to claim 1 or 2, wherein the mixture comprises, by weight relative to the total weight of the mixture:
a) 20 to 50% of dairy matter, preferably 20 to 40%;
b) 10 to 50% of plant matter, preferably 15 to 35%, comprising at least 50% by weight of legume(s) wholly or partly in the form of seeds;
c) 5 to 20% of an added fat matter, preferably an added fat matter of plant origin;
d) 20 to 50% of water; and
e) 0.5 to 10% of flavouring agents.

4. The method according to any one of claims 1 to 3, wherein the plant matter comprises, by weight relative to the total weight of the plant matter, at least 70%, 80%, 90% or 95% of plant matter from one or more legume(s), wholly or partly in the form of seeds.

5. The method according to any one of claims 1 to 4, wherein the plant matter consists 100% of plant matter from one or more legume(s), wholly or partly in the form of seeds.

6. The method according to any one of claims 1 to 5, wherein the legume(s), wholly or partly in the form of seeds, are incorporated in the form of a mixture of seeds, preferably in the form of hydrated seeds, cooked-hydrated seeds, or cooked and dried seeds.

7. The method according to any one of claims 1 to 5, wherein the plant matter of legume(s), wholly or partly in the form of seeds, is incorporated in the form of a mixture of:
(i) seeds, hydrated seeds, cooked-hydrated seeds, or cooked and dried seeds, and
(ii) protein isolate powder or protein concentrate powder.

8. The method according to any one of claims 1 to 7, wherein the cooking is carried out continuously at a temperature of 90 to 145°C, with a holding time of 3 to 20 seconds.

9. The method according to any one of claims 1 to 8, wherein the cooking is carried out in batch at a temperature of 80 to 120°C, with a cooking time of 2 to 10 minutes and a holding time of 0 to 2 minutes.

10. A food product obtainable by the method according to any one of the preceding claims, comprising, by weight relative to the total weight of the product:
a) 20 to 80% of dairy matter; and
b) 10 to 80% of plant matter, comprising at least 50% by weight of legume(s), wholly or partly in the form of seeds.

11. The food product according to claim 10, comprising, by weight relative to the total weight of the product:
a) 2 to 30% of an added fat matter, preferably an added fat matter of plant origin;
b) 5 to 60% of water; and
c) 0.1 to 15% of flavouring agents.

12. The food product according to claim 10 or 11, comprising, by weight relative to the total weight of the product:
a) 20 to 50% of dairy matter, preferably 20 to 40%;
b) 10 to 50% of plant matter, preferably 15 to 35% of plant matter, comprising at least 50% by weight of legume(s) wholly or partly in the form of seeds;
c) 5 to 20% of an added fat matter, preferably an added fat matter of plant origin;
d) 20 to 50% of water; and
e) 0.5 to 10% of flavouring agents.

13. The food product according to any one of claims 10 to 12, having a dry matter content of 25 to 60%, expressed as a percentage of the weight of the product.

14. The food product according to any one of claims 10 to 13, having a fat content on a dry matter basis of 20 to 60%, expressed as a percentage of the weight of the product.

15. The food product according to any one of claims 10 to 14, wherein the plant matter comprises, by weight relative to the total weight of the plant matter, at least 70%, 80%, 90% or 95% of plant matter from one or more legume(s), wholly or partly in the form of seeds.

16. The food product according to any one of claims 10 to 15, wherein the legume(s), wholly or partly in the form of seeds, are incorporated in the form of seeds, preferably in the form of hydrated seeds, cooked-hydrated seeds, or cooked and dried seeds.

17. The food product according to any one of claims 10 to 16, wherein the plant matter from legume(s), wholly or partly in the form of seeds, is incorporated in the form of a mixture of:
(i) seeds, hydrated seeds, cooked-hydrated seeds, cooked and dried seeds, or flour, and
(ii) protein isolate powder or protein concentrate powder.
